# EUROPÄISCHE PATENTSCHRIFT

(11) **EP 3 400 410 B1**
(45) Veröffentlichungstag und Bekanntmachung des Hinweises auf die Patenterteilung: **07.08.2019**
(21) Anmeldenummer: 17807879.6
(22) Anmeldetag: 01.12.2017
(51) Int. Cl.: F25B 49/02

(54) **VERFAHREN ZUM BETRIEB EINES DREHZAHLVARIABLEN KÄLTEMITTELVERDICHTERS**
METHOD FOR OPERATING A ROTATIONAL-SPEED-VARIABLE REFRIGERANT COMPRESSOR
PROCÉDÉ POUR FAIRE FONCTIONNER UN COMPRESSEUR FRIGORIFIQUE À MOTEUR ÉLECTRIQUE À VITESSE VARIABLE

(30) Priorität: 01.12.2016 AT 5025416 U
(43) Veröffentlichungstag der Anmeldung: 14.11.2018
(73) Patentinhaber: Nidec Global Appliance Germany GmbH, 24939 Flensburg (DE)
(72) Erfinder: GRIES, Ulrich, 22765 Hamburg (DE); GLÄSER, Jürgen Ewald, Handewitt 24983 (DE); SLOT, Allan Haue, 6400 Sønderborg (DK); FOGH, Hans-Erik, 24939 Flensburg (DE)
(74) Vertreter: KLIMENT & HENHAPEL
(86) Internationale Anmeldenummer: PCT/EP2017/081204
(87) Internationale Veröffentlichungsnummer: WO 2018/100165

(56) Entgegenhaltungen:
- EP-A1- 0 931 236
- EP-A1- 1 684 025
- WO-A1-2015/189009
- DE-A1-102011 079 205
- DE-A1-102013 114 374
- DE-C1- 19 753 425

## Beschreibung

### GEBIET DER ERFINDUNG

Die Erfindung betrifft ein Verfahren zum Betrieb eines drehzahlvariablen Kältemittelverdichters zur Kühlung eines Kühlvolumens einer Kälteanlage, wobei die Kälteanlage zumindest einen Thermostat zur direkten oder indirekten Überwachung eines Temperaturzustandes des Kühlvolumens umfasst und wobei der Kältemittelverdichter zyklisch betrieben wird und ein Kühlzyklus des Kältemittelverdichters beginnt, wenn der Kältemittelverdichter durch ein vom Thermostat ausgelöstes Schaltsignal in einen EIN-Zustand versetzt wird und der Kühlzyklus endet, wenn der Kältemittelverdichter durch ein vom Thermostat ausgelöstes weiteres Schaltsignal in einen AUS-Zustand versetzt wird und das Drehzahlverhalten des Kältemittelverdichters während eines Kühlzyklus mittels einer in einer elektronischen Steuereinrichtung des Kältemittelverdichters gespeicherten Vorgabedrehzahlregelung auf Basis zumindest einer vordefinierten Kenngröße geregelt wird, indem die zumindest eine vordefinierte Kenngröße hinsichtlich Über- und/oder Unterschreitung durch eine aktuelle Kenngröße eines aktuellen Kühlzyklus überwacht wird, sowie eine elektronische Steuereinrichtung zur Steuerung des zyklischen Betriebs eines drehzahlvariablen Kältemittelverdichters. Oftmals wird die elektronische Steuereinrichtung des Kältemittelverdichters auch als elektronische Steuer- und Regelungseinrichtung des Kältemittelverdichters bezeichnet.

Drehzahlvariable Kältemittelverdichter sind im Zusammenhang mit einer Vielzahl unterschiedlicher Kälteanlagen, wie Kühlmöbel, also beispielsweise Kühlschränke oder -regale, Gefrieranlagen, Klimaanlagen oder Wärmepumpen, einsetzbar. Sie bieten gegenüber drehzahlfesten Kältemittelverdichtern den Vorteil, energieoptimierter arbeiten zu können und die abzugebende Kälteleistung an die Kälteanforderung das Kühlvolumen betreffend anpassen zu können.

Optimalerweise kommen drehzahlvariable Kältemittelverdichter bei Kälteanlagen mit eigener elektronischer Steuereinheit und Bauteilen zur Überwachung des Betriebszustands der Kälteanlagen zum Einsatz. Solche Kälteanlagen werden in der Folge als intelligente Kälteanlagen bezeichnet. Dabei werden in der elektronischen Steuereinheit der Kälteanlage, welche zur elektronischen Steuereinrichtung des Kältemittelverdichters unterschiedlich ist, verschiedene Schaltsignale, Kenngrößen und Messgrößen verarbeitet und aus diesen Eingangsgrößen ein Steuersignal generiert, welches an die elektronische Steuereinrichtung des Kältemittelverdichters übermittelt wird. Bei diesem Steuersignal kann es sich beispielsweise um eine Drehzahlvorgabe handeln, die, abhängig von der aktuellen Temperatur oder des Temperaturverlaufs des Kühlvolumens, der elektronischen Steuereinrichtung des Kältemittelverdichters vorgibt, mit welcher Drehzahl der Kältemittelverdichter betrieben werden soll bzw. ob die elektronische Steuereinrichtung des Kältemittelverdichters diesen ein oder ausschalten soll.

Der Betrieb, insbesondere das Drehzahlverhalten eines drehzahlvariablen Kältemittelverdichters, wird in intelligenten Kälteanlagen daher durch das Zusammenspiel der elektronischen Steuereinheit der Kälteanlage mit der elektronischen Steuereinrichtung des Kältemittelverdichters geregelt, wobei die elektronische Steuereinheit der Kälteanlage in der Regel bereits gezielt bestimmte Kälteanforderungen an die elektronische Steuereinrichtung des Kältemittelverdichters übermittelt.

Die gegenständliche Erfindung bezieht sich jedoch auf eine andere Art von Kälteanlagen, nämlich auf solche, die über keine elektronische Steuereinheit verfügen, die mit der elektronischen Steuereinrichtung des Kältemittelverdichters kommunizieren können und welche keine elektronischen Bauteile zur Überwachung des Betriebszustands der Kälteanlage aufweisen. Derartige Kälteanlagen werden daher in der Folge als einfache Kälteanlagen bezeichnet. Sie umfassen zumindest einen Thermostat, welcher das Temperaturniveau des Kühlvolumens überwacht und abhängig vom aktuellen Temperaturniveau ein Schaltsignal auslöst, welches den Kältemittelverdichter in den EIN-Zustand versetzt oder in den AUS-Zustand versetzt. Einfache Kälteanlagen kommunizieren weder eine Drehzahlvorgabe an die elektronische Steuereinrichtung des Kältemittelverdichters noch andere Daten. Sie sind auch nicht in der Lage andere Betriebsparameter zu erfassen wie beispielsweise die Kühlraumtemperatur oder deren Verlauf und daraus Kälteanforderungen an den Kältemittelkompressor zu berechnen.

Durch den Thermostat wird Kälteleistung entweder angefordert oder nicht angefordert, ohne diese jedoch zu quantifizieren, dh. dass die Drehzahlregelung des Kältemittelverdichters ausschließlich durch die elektronische Steuereinrichtung des Kältemittelverdichters somit durch deren Programmierung vorgenommen wird.

Um dennoch den grundsätzlichen Vorteil von drehzahlvariablen Kältemittelverdichtern gegenüber drehzahlfesten Kältemittelverdichtern nutzen zu können, ist es erforderlich, dass das von der elektronischen Steuereinrichtung des Kältemittelverdichters geregelte Drehzahlverhalten des Kältemittelverdichters ein hinsichtlich zu definierender Parameter, beispielsweise hinsichtlich Energieverbrauch möglichst optimiertes ist.

Unter möglichst energieoptimiert ist dabei zu verstehen, dass der Stromverbrauch bzw. Energieverbrauch des Kältemittelverdichters bei der für den jeweiligen Anwendungsfall erforderlichen Kühlung des Kühlvolumens besonders gering ist und der Kältemittelverdichter daher ressourcenschonend betrieben werden kann.

Dabei ist es als erschwerend anzusehen, dass die elektronische Steuereinrichtung des Kältemittelverdichters von der Kälteanlage keine Informationen über deren Betriebszustand erhält, insbesondere keine Drehzahlvorgabe.

Dieser Nachteil wird in der Praxis kompensiert durch den Umstand, dass sich einfache Kälteanlagen dadurch auszeichnen, dass sie gegenüber intelligenten Kälteanlagen einen geringeren Anschaffungspreis aufweisen, weswegen sie weltweit dennoch stark verbreitet sind.

### STAND DER TECHNIK

Sowohl drehzahlvariable als auch drehzahlfeste Kältemittelverdichter, bewirken eine Zirkulation eines Kältemittels in einem abgeschlossenen Kältemittelsystem. Das Kältemittel wird dabei durch Energieaufnahme aus dem Kühlvolumen in einem Verdampfer erhitzt und schließlich überhitzt und mittels des Kältemittelverdichters, auch Kältemittelkompressor genannt, in einer Kolben-Zylinder-Einheit durch einen sich in einem Zylindergehäuse translatorisch bewegenden Kolben auf ein höheres Druckniveau gepumpt, wo das Kältemittel Wärme über einen Kondensator abgibt und über eine Drossel, in der eine Druckreduzierung und die Abkühlung des Kältemittels erfolgt, wieder zurück in den Verdampfer befördert wird. Die Bewegung des Kolbens wird über einen von einer elektrischen Antriebseinheit angetriebenen Kurbeltrieb umfassend eine Kurbelwelle realisiert.

Der oben beschriebene Kältemittelprozess läuft während eines Kühlzyklus des Kältemittelverdichters ab, wobei der Kältemittelverdichter während des Kühlzyklus angetrieben wird und ein von der elektronischen Steuereinrichtung des Kältemittelverdichters geregeltes Drehzahlverhalten aufweist, wobei die elektronische Steuereinrichtung die elektrische Antriebseinheit des Kältemittelverdichters ansteuert.

Ein Kühlzyklus beginnt durch ein vom Thermostat der Kälteanlage ausgelöstes Schaltsignal, welches den Kältemittelverdichter in den EIN-Zustand versetzt. Beispielsweise löst der Thermostat ein Schaltsignal für den EIN-Zustand des Kältemittelverdichters aus, wenn das Temperaturniveau im Kühlvolumen oder eine Kühlvolumentemperatur oder eine für die Kühlvolumentemperatur repräsentative Temperatur einen vorgegebenen Maximalwert übersteigt. Zum Zwecke der Überwachung des Temperaturniveaus des Kühlvolumens kann der Thermostat beispielsweise als dampfdruckbasiertes Thermostat, insbesondere als Balgthermostat, ausgebildet sein oder einen bimetallischen Streifen oder ein NTC-(negativer Temperaturkoeffizient) Element als Temperaturfühler aufweisen.

Der Kältemittelverdichter wird so lange angetrieben bzw. verbleibt so lange im Kühlzyklus, in dem der KältemittelProzess abläuft, bis die elektronische Steuereinrichtung des Kältemittelverdichters ein vom Thermostat ausgelöstes weiteres Schaltsignal empfängt, welches den Kältemittelverdichter in den AUS-Zustand versetzt. Das weitere Schaltsignal kann dabei beispielsweise ausgelöst werden, wenn das Temperaturniveau oder eine Kühlvolumentemperatur oder eine für die Kühlvolumentemperatur repräsentative Temperatur aufgrund der im Kühlzyklus stattfindenden Kühlung im Kühlvolumen unter einen vorgegebenen Minimalwert abgesunken ist.

Um die Kühlung des Kühlvolumens möglichst energieoptimiert zu ermöglichen, arbeitet die elektronische Steuereinrichtung des Kältemittelverdichters während der Kühlzyklen gemäß einer programmierten Vorgabe, welche das Drehzahlverhalten des Kältemittelverdichters während eines Kühlzyklus regelt. Diese Vorgabedrehzahlregelung ermöglicht es, dass drehzahlvariable Kältemittelverdichter auch in einfachen Kälteanlagen, welche wie eingangs erwähnt, selbst über keine elektronische Steuereinheit verfügen, die mit der elektronischen Steuereinrichtung des Kältemittelverdichters zu kommunizieren in der Lage ist, im Rahmen der programmierten Vorgabe individuell, bspw. energieoptimiert geregelt werden.

Die Vorgabedrehzahlregelung ist dabei derart eingerichtet, dass mindestens eine aktuelle, von der elektronischen Steuerung des Kältemittelverdichters während eines Kühlzyklus erfassbare Kenngröße mit mindestens einer, in der elektronischen Steuereinrichtung gespeicherten, vordefinierten Kenngröße verglichen wird und das Drehzahlverhalten des Kältemittelverdichters in Abhängigkeit davon geregelt wird.

Bei der zumindest einen vordefinierten Kenngröße kann es sich um unterschiedlichste Kenngrößen handeln, beispielsweise um die elektrische Last des Kältemittelverdichters, welche elektrische Last durch eine Messung des elektrischen Stroms durch den Kältemittelverdichter, insbesondere durch den durch die elektrische Antriebseinheit des Kältemittelverdichters fließenden elektrischen Strom, während des Kühlzyklus bestimmt wird.

Bevorzugterweise handelt es sich allerdings bei der vordefinierten Kenngröße um die Dauer eines Kühlzyklus. Diese steht dabei für jenen Wert der Kenngröße, bei der ein möglichst energieoptimierter, zyklischer Betrieb, bei vorgegebenem Drehzahlverhalten während eines Kühlzyklus, vorzugsweise bei einer möglichst geringen Drehzahl, bei welcher der den Kältemittelverdichter antreibende Elektromotor mit hohen Wirkungsgrad betrieben werden kann, ermöglicht wird.

Mit anderen Worten soll durch die Vorgabedrehzahlregelung ein Temperaturniveau im Kühlvolumen der Kälteanlage dauerhaft möglichst energieoptimiert gehalten werden können. Im Falle der Dauer eines Kühlzyklus als vordefinierte Kenngröße bewirkt die Vorgabedrehzahlregelung beispielsweise, dass bei Über- oder Unterschreiten dieser vorgegebenen Dauer, also wenn die Zeitspanne zwischen dem Ansprechen des Thermostats der einfachen Kälteanlage zum Ein- bzw. Ausschalten des Kältemittelverdichters größer oder kleiner ist als die vordefinierte Kenngröße, dass die elektronische Steuereinrichtung des Kältemittelverdichters dessen Drehzahl entweder sofort oder beim nächsten Kühlzyklus verändert, mit dem Ziel, dass darauffolgende Kühlzyklen wieder eine Dauer aufweisen, die der vordefinierten Kenngröße (Dauer) entsprechen, so dass der Kältemittelkompressor in jedem Kühlzyklus wieder möglichst energieoptimiert betrieben werden kann.

Eine derartige Vorgabedrehzahlregelung zum Betrieb eines drehzahlvariablen Kältemittelverdichters in einer einfachen Kälteanlage ist beispielsweise aus der DE 102013114374 bekannt. Dabei erfolgt die Regelung des Drehzahlverhaltens entweder während des aktuellen Kühlzyklus, wobei die Drehzahl des Kältemittelverdichters erhöht wird, wenn eine Überschreitung der zumindest einen vordefinierten Kenngröße (dort Dauer eines Kühlzyklus) durch die aktuelle Kenngröße detektiert wurde. Eine solche Erhöhung kann während eines Kühlzyklus auch mehrmals erfolgen, wenn die aktuelle Kenngröße mehrere vordefinierte Kenngrößen überschreitet, d.h. wenn beispielsweise trotz Erhöhung der Drehzahl der Thermostat immer noch kein Schaltsignal zum Abschalten des Kältemittelverdichters auslöst, da das Temperaturniveau im Kühlvolumen noch immer zu hoch ist.

Die Erhöhung kann beispielsweise progressiv, degressiv, linear oder stufenförmig erfolgen.

Erkennt die elektronische Steuereinrichtung, beispielsweise nach mehreren Kühlzyklen des Kältemittelverdichters, dass die, auch mehrfache, Erhöhung der Drehzahl in jedem Kühlzyklus immer noch nicht dazu führt, dass die vordefinierte Kenngröße, beispielsweise die vordefinierte Dauer eines Kühlzyklus eingehalten werden kann, dann kann gemäß dem Stand der Technik auch vorgesehen sein, dass die Startdrehzahl eines oder mehrerer nachfolgender Kühlzyklen bereits höher eingestellt wird als dies im möglichst energieoptimierten Fall vorgesehen ist.

Gleichermaßen kann vorgesehen sein, dass die Startdrehzahl eines nachfolgenden Kühlzyklus verringert wird, wenn die zumindest eine vordefinierte Kenngröße unterschritten wird.

Wie genau sich das Drehzahlverhalten des Kältemittelverdichters aufgrund der Vorgabedrehzahlregelung darstellt, ist abhängig von der individuellen Programmierung, die vom Kältemittelverdichter-Hersteller bei Auslieferung des Kältemittelverdichters vorgegeben wird. Wesentlich ist jedenfalls, dass die Vorgabedrehzahlregelung, welche die Drehzahl während eines Kühlzyklus regelt, in Abhängigkeit einer vordefinierten Kenngröße erfolgt.

Die zumindest eine vordefinierte Kenngröße wird dabei vom Hersteller des Kältemittelverdichters derart gewählt, dass zuvor bekannte Betriebsparameter der Kälteanlage, wie beispielsweise Wärme- oder Kälteverluste im Kühlvolumen und/oder im Kältemittelsystem sowie gegebenenfalls zu erwartende Umgebungstemperaturen, berücksichtigt werden, sodass der drehzahlvariable Kältemittelverdichter aufgrund der Vorgabedrehzahlregelung während eines Kühlzyklus möglichst energieoptimiert läuft. Bei Abweichungen einer zur zumindest einen vordefinierten Kenngröße korrespondierenden, aktuellen Kenngröße von der zumindest einen vordefinierten Kenngröße während eines aktuellen Kühlzyklus, dient die Vorgabedrehzahlregelung dazu, das Drehzahlverhalten des Kältemittelkompressors so zu regeln, dass möglichst rasch, entweder noch während des aktuellen Kühlzyklus oder zumindest bei einem darauffolgenden oder binnen einigen wenigen darauffolgenden Kühlzyklen, die aktuelle Kenngröße wieder im Wesentlichen der vordefinierten Kenngröße entspricht.

Da die vordefinierte Kenngröße samt Vorgabedrehzahlregelung in der elektronischen Steuereinrichtung des Kältemittelverdichters bereits bei Auslieferung des Kältemittelverdichters durch dessen Hersteller gespeichert bzw. hinterlegt ist, handelt es sich bei der Bestimmung der vordefinierten Kenngröße um eine Kompromiss, da zu diesem Zeitpunkt in der Regel der Einsatzort des Kältemittelverdichters (und damit keine Umgebungsbedingungen, insbesondere -temperaturen) nicht bekannt ist. Darüberhinaus soll der Kältemittelverdichter auch noch den Einbau in unterschiedliche Kälteanlagen ermöglichen, die sich möglicherweise hinsichtlich Aufbau und damit auch Dämmung voneinander unterscheiden. Unter diesen Umständen ist nachvollziehbar, dass die vordefinierte Kenngröße samt Vorgabedrehzahlregelung nicht in allen Kombinationen zu einem möglichst energieoptimierten Betrieb führen kann.

Die Einsatzbedingungen der einfachen Kälteanlagen kann daher als derart inhomogen angesehen werden, dass die vordefinierte Kenngröße, auf welcher die Vorgabedrehzahlregelung basiert, nicht in allen Fällen dazu in der Lage ist, den Kältemittelkompressor möglichst energieoptimiert zu betreiben.

So kann es beispielsweise bei Betrieb eines solchen Kältemittelverdichters in einer Kälteanlage bei hohen Umgebungstemperaturen der Fall sein, dass die für einen möglichst energieoptimierten Betrieb vordefinierte Dauer eines Kühlzyklus zwar grundsätzlich eingehalten werden kann, die zumindest eine aktuelle Kenngröße nach anfänglichen Abweichungen daher rasch wieder der vordefinierten Kenngröße entspricht, um dies zu erreichen die Vorgabedrehzahlregelung aber den Kältemittelverdichter beispielsweise bei jedem Kühlzyklus stark beschleunigen muss oder aber jeden Kühlzyklus mit hoher Startdrehzahl beginnen muss.

In einem solchen Fall ermöglicht die Vorgabedrehzahlregelung zwar, dass die vordefinierte Kenngröße eingehalten werden kann, beispielsweise die vordefinierte Dauer eines Kühlzyklus durch die Dauer eines aktuellen Kühlzyklus nicht überschritten wird, allerdings muss die Vorgabedrehzahlregelung dafür ständig außergewöhnlich hohe Drehzahlen fahren, so dass kein möglichst energieoptimierter Betrieb möglich ist.

Beispielsweise beschreibt die DE 10 2011 079 205 A1 ein Verfahren zum Betreiben eines Verdichters eines Kältegeräts, wobei eine Umgebungstemperatur des Kältegeräts erfasst wird und der Verdichter am Beginn der Einschaltphase mit einer Leistung betrieben wird, die von der Umgebungstemperatur abhängt.

### AUFGABE DER ERFINDUNG

Es ist daher eine Aufgabe der Erfindung, die Nachteile des Standes der Technik zu überwinden und ein Verfahren zum Betrieb eines drehzahlvariablen Kältemittelverdichters mit einer elektronischen Steuereinrichtung vorzuschlagen, so dass bei Betrieb eines solchen drehzahlvariablen Kältemittelverdichters mit einer einfachen Kälteanlage, die über keine eigene elektronische Steuereinheit verfügt, welche
mit der elektronischen Steuereinrichtung des Kältemittelverdichters kommunizieren kann, eine Anpassung der durch die elektronische Steuereinrichtung des Kältemittelverdichters vorgenommene Vorgabedrehzahlregelung an die Kälteanlage und/oder Umgebungsbedingungen erfolgen kann.

### DARSTELLUNG DER ERFINDUNG

Diese Aufgabe wird bei einem erfindungsgemäßen Verfahren der eingangs beschriebenen Art für eine einfache Kälteanlage dadurch gelöst, dass eine von der Temperatur des Kühlvolumens unabhängige, weitere Temperatur gemessen wird und die zumindest eine vordefinierte Kenngröße in Abhängigkeit der weiteren Temperatur geändert wird.

Die Erfassung und Übermittlung der weiteren Temperatur, die unabhängig von dem vom Thermostat überwachten Temperaturniveau des Kältemittelverdichters ist, stellt eine zusätzliche Information zu den Schaltsignalen des Thermostats für die elektronische Steuereinrichtung des Kältemittelverdichters dar. Somit kann die weitere Temperatur als zusätzliche Regelgröße in die Regelung des Drehzahlverhaltens, also in die Vorgabedrehzahlregelung, einbezogen werden. Unter Einbeziehung der weiteren Temperatur in die Vorgabedrehzahlregelung ist dabei zu verstehen, dass die zumindest eine vordefinierte Kenngröße in Abhängigkeit der weiteren Temperatur modifiziert wird, während die übrigen Parameter der Vorgabedrehzahlregelung, etwa der Betrag um den die Drehzahl erhöht bzw. verringert wird, wenn die zumindest eine vordefinierte Kenngröße über- oder unterschritten wird, bevorzugterweise unverändert bleiben kann oder aber ebenfalls adaptiert werden kann. Im einfachsten Fall wird durch die Änderung bzw. Modifizierung der zumindest einen vordefinierten Kenngröße die Bedingung verändert die eintreten muss, um eine Änderung des Drehzahlverhaltens, vorzugsweise der aktuellen Drehzahl, des Kältemittelverdichters auszulösen.

Die weitere Temperatur kann grundsätzlich - mit Ausnahme innerhalb des Kühlvolumens - an jedem Ort der Kälteanlage, des Kältemittelverdichters oder der elektronischen Steuereinrichtung des Kältemittelverdichters gemessen werden. Über die gemessene weitere Temperatur kann auf betriebsbedingte Einflussgrößen der Kälteanlage, beispielsweise Betriebsabwärme, und/oder der Umgebungsbedingungen, beispielsweise Umgebungstemperatur, der Kälteanlage entweder direkt oder indirekt rückgeschlossen werden.

Beispielsweise kann die weitere Temperatur außerhalb der Kälteanlage gemessen werden und direkt der Umgebungstemperatur entsprechen. Es ist auch denkbar, dass die weitere Temperatur im Inneren eines Außengehäuses der Kälteanlage, jedoch nicht im Inneren des Kühlvolumens, gemessen wird und über die gemessene weitere Temperatur und/oder die Entwicklung der gemessenen weiteren Temperatur auf die betriebsbedingten Einflussgrößen der Kälteanlage und/oder die Umgebungsbedingungen der Kälteanlage indirekt zurückgeschlossen wird.

Die zumindest eine vordefinierte Kenngröße der Vorgabedrehzahlregelung kann dabei in Abhängigkeit der gemessenen weiteren Temperatur sowohl erhöht als auch verringert werden, wodurch die Vorgabedrehzahlregelung beeinflusst wird, um das Drehzahlverhalten des Kältemittelverdichters während des Kühlzyklus derart anzupassen, dass ein möglichst energieoptimierter Betrieb ermöglich wird. Aus der gemessenen weiteren Temperatur bzw. der Entwicklung der gemessenen weiteren Temperatur kann die elektronischen Steuereinrichtung des Kältemittelverdichters auch schließen, dass keine Änderung der zumindest einen vordefinierten Kenngröße angezeigt ist. In diesem Betriebszustand kann der Kältemittelverdichter also bereits aufgrund der nicht modifizierten Vorgabedrehzahlregelung möglichst energieoptimiert betrieben werden.

Die Änderung der zumindest einen vordefinierten Kenngröße in Abhängigkeit der gemessenen weiteren Temperatur kann beispielsweise über einen in der Steuereinrichtung des Kältemittelverdichters hinterlegten Algorithmus erfolgen. In einer Ausführungsvariante des erfindungsgemäßen Verfahrens kann beispielsweise ein Multiplikationsfaktor für die zumindest eine vordefinierte Kenngröße vorgesehen sein, wobei der Multiplikationsfaktor in Abhängigkeit der gemessenen weiteren Temperatur variiert wird. So ist es beispielsweise denkbar, dass der Multiplikationsfaktor kontinuierlich oder in diskreten Schritten in Abhängigkeit der gemessenen weiteren Temperatur vergrößert oder verkleinert wird. Auch ist es denkbar, dass in der elektronischen Steuereinrichtung ein Datensatz mit mehreren Werten für die zumindest eine vordefinierte Kenngröße hinterlegt ist und jedem Wert eine gemessene weitere Temperatur und/oder ein Temperaturbereich und/oder eine Entwicklung der gemessenen weiteren Temperatur zugeordnet ist, wobei die Auswahl der Werte der zumindest einen vordefinierten Kenngröße aus dem Datensatz aufgrund der aktuell gemessenen weiteren Temperatur erfolgt.

In der Regel erfolgt die Überwachung der weiteren Temperatur und die Änderung der zumindest einen vordefinierten Kenngröße in der elektronischen Steuereinrichtung des Kältemittelverdichters. Mit anderen Worten sind alle zur Änderung der zumindest einen vordefinierten Kenngröße in Abhängigkeit der gemessenen weiteren Temperatur erforderliche Parameter und/oder Algorithmen in der elektronischen Steuereinrichtung gespeichert bzw. hinterlegt.

Durch die Änderung der zumindest einen vordefinierten Kenngröße in Abhängigkeit der gemessenen weiteren Temperatur kann sichergestellt werden, dass der drehzahlvariable Kältemittelverdichter möglichst energieoptimiert betrieben wird. Dadurch lässt sich der Stromverbrauch bzw. Energiebedarf des Kältemittelverdichters über die Lebensdauer der einfachen Kälteanlage weg gesehen weiter reduzieren.

Analog wird die eingangs gestellte Aufgabe auch durch eine elektronische Steuereinrichtung zur Steuerung des zyklischen Betriebs eines drehzahlvariablen Kältemittelverdichters, wobei die elektronische Steuereinrichtung dazu eingerichtet ist,
- den Kältemittelverdichter aufgrund eines von einem Thermostat zur direkten oder indirekten Überwachung eines Temperaturzustandes eines Kühlvolumens einer Kälteanlage ausgelösten Schaltsignals einzuschalten, um einen Kühlzyklus zu beginnen und
- den Kältemittelverdichter aufgrund eines von dem Thermostat ausgelösten weiteren Schaltsignals wieder auszuschalten, um den Kühlzyklus zu beenden und
- das Drehzahlverhalten des Kältemittelverdichters während eines Kühlzyklus mittels einer in einer elektronischen Steuereinrichtung des Kältemittelverdichters gespeicherten Vorgabedrehzahlregelung auf Basis zumindest einer vordefinierten Kenngröße zu regeln und
- im Rahmen der Vorgabedrehzahlregelung die zumindest eine vordefinierte Kenngröße hinsichtlich Über- und/oder Unterschreitung durch eine aktuelle Kenngröße eines aktuellen Kühlzyklus zu überwachen,
gelöst, indem die elektronische Steuereinrichtung mit einer Temperaturmesseinrichtung zur Messung einer von der Temperatur des Kühlvolumens unabhängigen, weiteren Temperatur verbunden ist und dazu eingerichtet ist, die zumindest eine vordefinierte Kenngröße in Abhängigkeit der weiteren Temperatur zu ändern.

Die Temperaturmesseinrichtung kann beispielsweise als ein Messfühler, ein Widerstandsthermometer, ein Thermoelement oder ein Temperatursensor ausgebildet sein.

In einer weiteren besonders bevorzugten Ausführungsvariante der Erfindung ist es daher vorgesehen, dass die weitere Temperatur von einer Temperaturmesseinrichtung gemessen wird die integraler Bestandteil der elektronischen Steuereinrichtung des Kältemittelverdichters ist.

Üblicherweise weist die elektronische Steuereinrichtung des Kältemittelverdichters bereits zu anderen Zwecken, beispielsweise zur Überwachung der Temperatur der elektronischen Steuereinrichtung zur Verhinderung einer Überhitzung, eine Temperaturmesseinrichtung auf, sodass die elektronischen Steuereinrichtungen durch Implementierung der Erfindung nicht teurer werden und die Messwerte dieser Temperaturmesseinrichtung als erfindungsgemäße weitere Temperatur herangezogen werden können.

Ein zusätzlicher Vorteil der Verwendung der Messwerte einer bereits in einer herkömmlichen elektronischen Steuereinrichtung vorgesehenen Temperaturmesseinrichtung als weitere gemessene Temperatur besteht darin, dass lediglich die Programmierung der elektronischen Steuereinrichtung des Kältemittelverdichters verändert werden muss und nicht die Struktur der elektronischen Steuereinrichtung selbst. Dadurch lassen sich auch bereits im Einsatz befindliche Kältemittelverdichter auf einfache Art und Weise zur Durchführung des erfindungsgemäßen Verfahrens adaptieren.

Gleichermaßen ist in einer zweiten besonders bevorzugten Ausführungsvariante der Erfindung vorgesehen, dass die weitere Temperatur von einer Temperaturmesseinrichtung gemessen wird und die Temperaturmesseinrichtung an einem Gehäuse des Kältemittelverdichters angebracht ist. Da Kältemittelverdichter und elektronische Steuereinrichtung des Kältemittelverdichters üblicher Weise als Baugruppe hergestellt und an den Hersteller einer Kälteanlage geliefert werden, kann die Funktionsfähigkeit des erfindungsgemäßen Verfahrens auch dann sichergestellt werden, wenn die Temperaturmesseinrichtung am Gehäuse des Kältemittelverdichters angeordnet ist. Damit ist die Temperaturmesseinrichtung Teil der ausgelieferten Baugruppe und die Funktionstüchtigkeit des Verfahrens ist unabhängig von etwaigen Montage- oder Anschlussfehlern des Herstellers der Kälteanlage gewährleistet. Besonders bevorzugt ist die Temperaturmesseinrichtung auf einer Außenseite des Gehäuses angeordnet, während die Bestandteile des Kältemittelverdichters, also zumindest die elektrische Antriebseinheit und die Kolben-Zylinder-Einheit, im Inneren des Gehäuses des Kältemittelverdichters angeordnet sind.

In beiden der besonders bevorzugten Ausführungsvarianten kann vorgesehen sein, dass die gemessene weitere Temperatur und/oder die Entwicklung der gemessenen weiteren Temperatur über Algorithmen, vorzugsweise mathematische Zusammenhänge, oder empirisch ermittelte Kennwerte mit den Umgebungsbedingungen, insbesondere der Umgebungstemperatur, der Kälteanlage korreliert werden. Da sowohl der Kältemittelverdichter als auch die elektronische Steuereinrichtung des Kältemittelverdichters sich während dem Betrieb erhitzen, wird diese betriebsbedingte Erhitzung bei der Änderung der vordefinierten Kenngröße von der elektronischen Steuereinrichtung nicht berücksichtigt bzw. wird eine Abweichung der Entwicklung der gemessenen weiteren Temperatur von einer vordefinierten Entwicklung als Regelgröße für die Änderung der vordefinierten Kenngröße herangezogen. Beispielsweise können Kennwerte, beispielsweise Maximaltemperatur oder Abkühlgeschwindigkeit, für die weitere Temperatur für verschiedene Umgebungsbedingungen empirisch ermittelt werden und in Form eines Vergleichsdatensatzes in der elektronischen Steuereinrichtung des Kältemittelverdichters gespeichert werden, wobei die gemessene weitere Temperatur mit den Werten des Vergleichsdatensatzes oder mit aus den Daten des Vergleichsdatensatzes berechneten Vergleichswerten verglichen wird.

Die eingangs gestellte Aufgabe wird auch gelöst, durch eine Baugruppe umfassend
- einen drehzahlvariablen Kältemittelverdichter mit einer elektrischen Antriebseinheit und einer durch die elektrische Antriebseinheit antreibbaren Kolben-Zylinder-Einheit zur Verdichtung von Kältemittel;
- eine erfindungsgemäße elektronische Steuereinrichtung zur Steuerung des zyklischen Betriebs des drehzahlvariablen Kältemittelverdichters nach einem erfindungsgemäßen Verfahren. Eine derartige Baugruppe kann in einfacher Art und Weise in eine Kälteanlage verbaut werden, ohne dass eine Steuereinheit der Kälteanlage ein Steuersignal oder eine Drehzahlvorgabe an die elektronische Steuerungseinrichtung des Kältemittelverdichters übermittelt.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig.1: eine schematische Darstellung einer Rückseite einer Kälteanlage mit einer ersten Ausführungsvariante einer elektronische Steuereinrichtung;
- Fig.2: eine schematische Darstellung eines Kältemittelverdichters mit einer zweiten Ausführungsvariante der elektronischen Steuereinrichtung;
- Fig.3: eine schematische Darstellung des Drehzahlverhaltens dreier unterschiedlicher Zyklen des Kältemittelverdichters in einer Vorgabedrehzahlregelung;
- Fig.4a,4b: eine Gegenüberstellung des Drehzahlverhaltens eines Kältemittelverdichters mit einem Betriebsverhalten gemäß dem Stand der Technik (4a) und mit erfindungsgemäßem Betriebsverhalten (4b)

### WEGE ZUR AUSFÜHRUNG DER ERFINDUNG

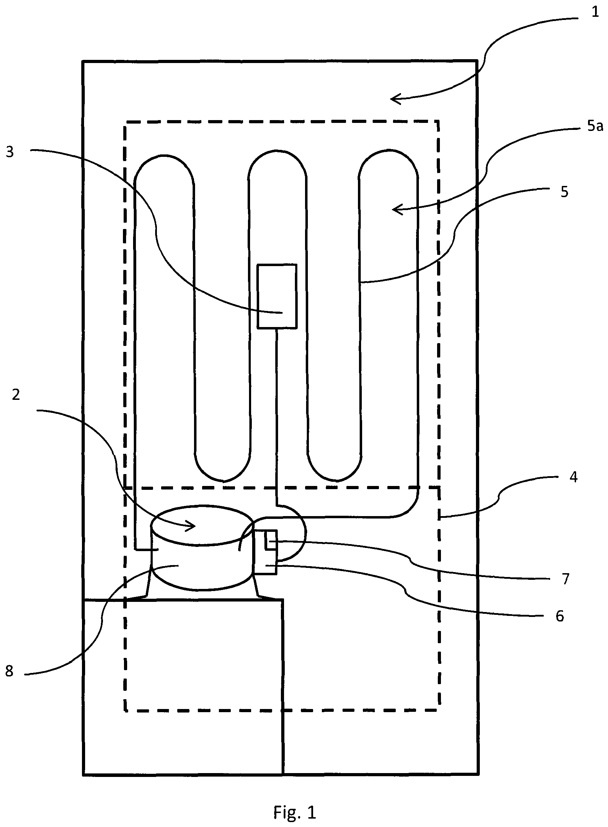

Figur 1 zeigt eine einfache Kälteanlage 1 mit einem drehzahlvariablen Kältemittelverdichter 2, einer Kältemittelleitung 5 und einem Verdampfer 5a. Kältemittelverdichter 2, Kältemittelleitung 5 und Verdampfer 5a bilden ein geschlossenes Kältemittelsystem mit aus, in welchem Kältemittelsystem während des Betriebs, also während eines Kühlzyklus C_{K} des Kältemittelverdichters 2, Kältemittel zirkuliert. Die Kälteanlage 1 weist ein Kühlvolumen 4 auf, welchem durch den Verdampfer 5a Wärme entzogen bzw. Kälteleistung zugeführt werden kann, indem das Kältemittel im Verdampfer 5a verdampft.

Die einzelnen Komponenten des Kältemittelverdichters 2, also zumindest eine Kolben-Zylinder-Einheit in der das Kältemittel taktweise verdichtet wird und eine elektrische Antriebseinheit, über welche die Kolben-Zylinder-Einheit antreibbar ist, sind innerhalb eines Gehäuses 8 des Kältemittelverdichters 2 angeordnet. Der drehzahlvariable Kältemittelverdichter 2 weist darüber hinaus eine elektronische Steuereinrichtung 6 zur Regelung des Drehzahlverhaltens des Kältemittelverdichters 2 auf, welche mit der elektrischen Antriebseinheit verbunden ist und diese ansteuert. Um die Kühlung des Kühlvolumens 4 möglichst energieoptimiert zu ermöglichen, arbeitet die elektronische Steuereinrichtung 6 des drehzahlvariablen Kältemittelverdichters 2 während der Kühlzyklen C_{K} gemäß einer programmierten Vorgabe, welche das Drehzahlverhalten des Kältemittelverdichters 2 während eines Kühlzyklus C_{K} regelt. Diese Vorgabedrehzahlregelung ermöglicht es, dass der drehzahlvariable Kältemittelverdichter 2 in der einfachen Kälteanlage 1 betrieben werden kann und stellt gleichzeitig einen möglichst energieoptimierten Betrieb sicher. Die programmierte Vorgabe wird dabei bereits bei der Programmierung der elektronischen Steuereinrichtung 6 des Kältemittelverdichters implementiert und stellt sozusagen einen standardisierten Auslieferungszustand dar, der einen möglichst energieoptimierten Betrieb in einer Vielzahl von Standardeinsatzbedingungen ermöglicht. Üblicherweise werden der drehzahlvariable Kältemittelverdichter 2 und die elektronische Steuereinrichtung 6 von einem Kältemittelverdichter-Hersteller als Baugruppe assembliert und als Einheit an die Hersteller von Kälteanlagen verkauft.

Das erfindungsgemäße Verfahren bzw. die erfindungsgemäße elektronische Steuereinrichtung des Kältemittelverdichters zur Anpassung des Betriebs des Kältemittelverdichters, an Einsatzbedingungen welche außerhalb der Standardeinsatzbedingungen liegen, insbesondere bei hohen Umgebungstemperaturen wird in der Folge detailliert beschrieben.

Die Kälteanlage 1 weist selbst keine eigenständige Steuereinheit auf, welche der Steuereinrichtung 6 des Kältemittelverdichters 2 Schaltsignale, Kenngrößen und Messgrößen zur Verfügung stellen kann oder ein Steuersignal übermittelt, welches eine Drehzahlvorgabe enthält. Das einzige Schaltsignal, welches die einfache Kälteanlage 1 an die Steuereinrichtung 6 des Kältemittelverdichters 2 übermittelt, stammt von einem Thermostat 3, in Abhängigkeit des Temperaturniveaus des Kühlvolumens 4. Dazu weist der Thermostat 3 in der Regel einen Temperaturfühler auf, beispielsweise einen bimetallischen Streifen oder ein dampfdruckbasiertes Messelement oder ein NTC (negativer Temperaturkoeffizient) Element, welches im Kühlvolumen 4 angeordnet ist, um die Temperatur des Kühlvolumens 4 direkt zu messen, oder am Verdampfer 5a angeordnet ist, um die Temperatur des Kühlvolumens 4 indirekt zu bestimmten. Bevorzugt ist der Thermostat 3 als dampfdruckbasierter Balgthermostat ausgebildet. Der Thermostat 3 ist ausgebildet um ein Schaltsignal auszulösen, welches an die Steuereinrichtung 6 des Kältemittelverdichters 2 übermittelt wird bzw. ein Schaltsignal an die Steuereinrichtung 6 zu übermitteln, welches Schaltsignal den Kältemittelverdichter 2 in einen EIN-Zustand versetzt, in welchem die Antriebseinheit aktiviert ist und Kältemittel in der Kolben-Zylinder-Einheit verdichtet wird. Der Thermostat 3 ist ausgebildet um ein weiteres Schaltsignal auszulösen, welches an die Steuereinrichtung 6 übermittelt wird bzw. ein weiteres Schaltsignal an die Steuereinrichtung 6 zu übermitteln, welches weitere Schaltsignal den Kältemittelverdichter 2 in einen AUS-Zustand versetzt, in welchem die Kolben-Zylinder-Einheit keinem Antriebsdrehmoment ausgesetzt ist.

Erfindungsgemäß ist eine Temperaturmesseinheit 7 vorgesehen, über welche eine von der Temperatur des Kühlvolumens 4 unabhängige, weitere Temperatur T_{W} gemessen wird. In der vorliegenden Ausführungsvariante ist die Temperaturmesseinheit 7 als Bestandteil der Steuereinrichtung 6 ausgebildet, beispielsweise als Onboard-Sensor auf einer Platine der Steuereinrichtung 6.

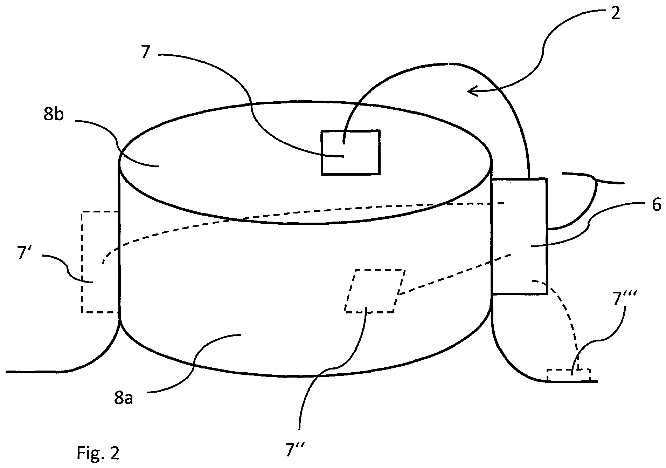

Figur 2 zeigt eine zweite Ausführungsvariante der Erfindung in der die Temperaturmesseinheit 7 am Gehäuse 8 des Kältemittelverdichters 2 angebracht ist. Bei dem Gehäuse 8 des Kältemittelverdichters 2 kann es sich beispielsweise um ein hermetisch kapselbares Gehäuse 8 handeln, welches ein Gehäuseunterteil 8a und ein Gehäuseoberteil 8b umfasst. Im vorliegenden Ausführungsbeispiel ist die Temperaturmesseinheit 7 an einer Außenfläche des Gehäuseoberteils 8b angebracht. Die Bezugszeichen 7' und 7" kennzeichnet strichliert dargestellte alternative Befestigungsposition an einer Außenseite des Gehäuseunterteils 8a, wohingegen das Bezugszeichen 7''' eine strichliert dargestellte alternative Befestigungsposition an einem Steher des Kältemittelverdichters 2.

### FUNKTIONSWEISE DER ERFINDUNG

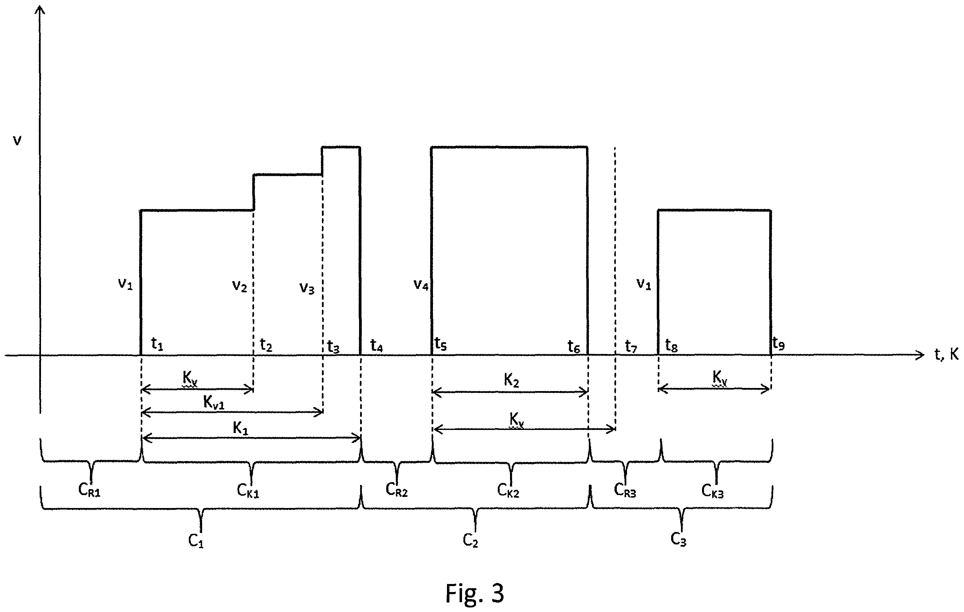

In der Folge soll anhand von Figur 3 ein Verfahren zum Betrieb des drehzahlvariablen Kältemittelverdichters 2 in einer einfachen Kälteanlage 1 beschrieben werden, wie es bereits aus dem Stand der Technik bekannt ist. Dabei soll insbesondere auf die Regelung des Drehzahlverhaltens des drehzahlvariablen Kältemittelverdichters 2, die sogenannte Vorgabedrehzahlregelung, eingegangen werden, bei der das Drehzahlverhalten des Kältemittelverdichters 2 während eines Kühlzyklus C_{K} auf Basis von zumindest einer in der elektronischen Steuereinrichtung 6 des Kältemittelverdichters 2 gespeicherten, vordefinierten Kenngröße Kᵥ geregelt wird und die zumindest eine vordefinierte Kenngröße Kᵥ hinsichtlich Über- und/oder Unterschreitung durch eine aktuelle Kenngröße Kₐ eines aktuellen Kühlzyklus C_{Ka} überwacht wird.

Im vorliegenden Ausführungsbeispiel handelt es sich bei der zumindest einen vordefinierten Kenngröße K_{V} um die Dauer eines Kühlzyklus C_{K}. Dabei werden die aktuelle Laufzeit und die tatsächliche Dauer des Kühlzyklus C_{K} von der elektronischen Steuereinrichtung 6 überwacht.

In Figur 3 sind dabei exemplarisch drei Betriebszyklen C₁,C₂,C₃ dargestellt, welche verschiedene Drehzahlverhalten des drehzahlvariablen Kältemittelverdichters 2 darstellen, welche sich während des Betriebs einstellen können. Ein Betriebszyklus C setzt sich dabei jeweils aus einem Ruhezyklus C_{R} und einem Kühlzyklus C_{K} zusammen, wobei der Kältemittelverdichter 2 während eines Kühlzyklus C_{K} in Betrieb ist und Kältemittel zur Kühlung des Kühlvolumens 4 durch das Kältemittelsystem zwangszirkuliert. Im Ruhezyklus C_{R} hingegen ist der Kältemittelverdichter 2 antriebslos geschalten und es erfolgt im Wesentlichen keine Kühlung des Kühlvolumens 4.

Der erste Kühlzyklus C_{K1} wird zum Zeitpunkt t₁ durch das vom Thermostat 3 ausgelöste Schaltsignal eingeleitet, wobei der Kältemittelverdichter 2 von der elektronischen Steuereinrichtung 6 in einen EIN-Zustand versetzt wird. Der Thermostat 3 löst das Schaltsignal aus, wenn eine Abweichung des Temperaturniveaus des Kühlvolumens 4 von einem vorgegeben Temperaturniveau detektiert wird, was auf einen Kältebedarf im Kühlvolumen 4 schließen lässt, sodass dem Kühlvolumen 4 Kälteleistung durch den Kältemittelverdichter 2 zugeführt werden muss. Im vorliegenden Fall wird zum Zeitpunkt t₁ eine Überschreitung des vorgegebenen Temperaturniveaus vom Thermostat 3, bzw. vom Temperaturfühler des Thermostats 3, gemessen. Die Temperatur im Kühlvolumen 4 ist also zu hoch.

Sobald der drehzahlvariable Kältemittelverdichter 2 in den EIN-Zustand versetzt ist, wird er mit einer Startdrehzahl v₁ betrieben. Zum Zeitpunkt t₂, der der vordefinierten Dauer des Kühlzyklus C_{K1} entspricht, ist das vorgegebene Temperaturniveau im Kühlvolumen 4 noch nicht erreicht, und der Thermostat 3 hat demgemäß noch kein Schaltsignal ausgelöst, um den Kältemittelverdichter 2 in den AUS-Zustand zu versetzen.

Es herrscht also zum Zeitpunkt t₂ weiterer Kältebedarf im Kühlvolumen 4. Da der tatsächliche Kältebedarf des Kühlvolumens 4 der elektronischen Steuereinrichtung 6 nicht bekannt ist, wird die Drehzahl v um einen vorbestimmten Wert, beispielsweise 10%, 20%, 30% oder 50%, der aktuellen Drehzahl v₁ auf eine erste erhöhte Drehzahl v₂ erhöht. Dadurch wird sichergestellt, dass der Kältebedarf im Kühlvolumen 4 schneller, oder bei sehr hohem Kältebedarf überhaupt, gedeckt werden kann bzw. der Kühlzyklus rasch beendet werden kann.

Zum Zeitpunkt t₃, der einem Grenzwert eines in der vordefinierten Laufzeit Kᵥ hinterlegten Datensatzes entspricht, ist der Kältebedarf des Kühlvolumens 4 noch immer nicht befriedigt, sodass im vorliegenden Beispiel eine weitere Erhöhung der Drehzahl v aus den oben genannten Gründen auf eine zweite erhöhte Drehzahl v₃ erfolgt.

Zum Zeitpunkt t₄ erhält die elektronische Steuereinrichtung 6 das vom Thermostat 3 ausgelöste weitere Schaltsignal, welches signalisiert, dass der Kältebedarf im Kühlvolumen 4 befriedigt ist und die Temperatur innerhalb des Kühlvolumens 4 innerhalb des zur Kühlung notwendigen vordefinierten Temperaturniveaus liegt. Aufgrund des weiteren Schaltsignals versetzt die elektronische Steuereinrichtung 6 den Kältemittelverdichter 2 in den AUS-Zustand, wodurch der zweite Ruhezyklus C_{R2} ausgelöst wird. Die zwischen den Zeitpunkten t₁ und t₄ vergangene Zeit entspricht der tatsächlichen Dauer K₁ des ersten Kühlzyklus C_{K1}. Da die tatsächliche Dauer K₁ größer ist als die vordefinierte Dauer K_{V} kann entweder vorgesehen sein, dass der nächste Kühlzyklus C_{K2} unverändert gemäß Vorgabedrehzahlregelung begonnen wird, mit dem Risiko, dass so wie in C_{K1} nachjustiert werden muss, oder aber kann es vorgesehen sein, dass die elektronische Steuereinrichtung 6 von einem erhöhten Kältebedarf im nachfolgenden Kühlzyklus C_{K2} aus geht. Letzteres kann insbesondere dann der Fall sein, wenn bereits Kühlzyklen vor dem Kühlzyklus C_{K1} existieren, deren Dauer länger war als die vordefinierte Laufzeit Kᵥ.

Um dem erwarteten höheren Kältebedarf des Kühlvolumens 4 Sorge zu tragen und diesen innerhalb der vordefinierten Dauer K_{V} des nachfolgenden Kühlzyklus C_{K2} liefern zu können, wird der nachfolgende Kühlzyklus C_{K2} der wiederum durch das Schaltsignal ausgelöst wird, mit einer erhöhten Startdrehzahl v₄ betrieben. Die erhöhte Startdrehzahl v₄ kann beispielsweise der letzten Drehzahl v des vorangegangenen Kühlzyklus C_{K1} entsprechen oder als Mittelwert der Drehzahlen v₁,v₂,v₃ der vorhergegangenen Kühlzyklus C_{K1} berechnet werden.

Im zweiten Kühlzyklus C_{K2} empfängt die elektronische Steuereinrichtung 6 das vom Thermostat 3 ausgelöste weitere Schaltsignal zur Abschaltung des Kältemittelverdichters 2 zum Zeitpunkt t₆. Die tatsächliche Dauer K₂ des zweiten Kühlzyklus C_{K2} ist jedoch geringer als die vordefinierte Dauer K_{V}, sodass der tatsächliche Kältebedarf des Kühlvolumens 4 bereits befriedigt war, bevor die vordefinierte Dauer K_{V} zum Zeitpunkt t₇ erreicht wird. Daraus kann die elektronische Steuereinrichtung 6 schließen, dass ein geringerer Kältebedarf im nachfolgenden Kühlzyklus C_{K3} erforderlich ist.

Um dem erwarteten geringeren Kältebedarf des Kühlvolumens 4 Sorge zu tragen und diesen innerhalb der vordefinierten Dauer K_{V} des nachfolgenden Kühlzyklus C_{K3} zu erreichen, wird der dritte Kühlzyklus C_{K3} mit einer gegenüber der Drehzahl v₄ des vorangegangenen Kühlzyklus C_{K2} verringerten Drehzahl v gestartet, die im vorliegenden Ausführungsbeispiel der Startdrehzahl v₁ entspricht. Im dritten Kühlzyklus C_{K3} stimmt die vordefinierte Dauer K_{V} mit der Dauer K₃ des dritten Kühlzyklus C₃ überein, sodass der Kältebedarf des Kühlvolumens 4 innerhalb der vordefinierte Dauer K_{V} mit der Drehzahl v₁ erreicht wird. Im dritten Kühlzyklus C_{K3} wird ein besonders energiesparender Betrieb des Kältemittelverdichters 2 erreicht.

Die oben beschriebene Regelung des Drehzahlverhaltens des Kältemittelverdichters 2 in der elektronischen Steuereinrichtung 6 entspricht der Vorgabedrehzahlregelung, welche ausgelegt ist, um über die gesamte Betriebsdauer des Kältemittelverdichters 2 einen möglichst energieoptimierten Betrieb zu ermöglichen.

Ein Nachteil des Stands der Technik äußert sich jedoch darin, dass die vordefinierte Kenngröße K_{V}, also im vorliegenden Ausführungsbeispiel die vordefinierte Dauer K_{V} des Kühlzyklus C_{K}, bereits bei der Auslegung der elektronischen Steuereinrichtung 6 des Kältemittelverdichters 2 in der elektronischen Steuereinrichtung 6 gespeichert werden muss. Da Kältemittelverdichter 2 für einfache Kälteanlagen 1 in alle Welt verkauft werden, ist bei der Programmierung der elektronischen Steuereinrichtung 6 der Kältemittelverdichters 2 keinerlei Information über die Einsatzbedingungen der Kälteanlage 1 während des Betriebs, insbesondere hinsichtlich Einsatzort der Kälteanlage 1 vorhanden.

Der Einsatzort und damit verbundenen die Umgebungstemperatur haben jedoch maßgeblichen Einfluss auf die Festlegung der vordefinierten Kenngröße K_{V}, da beispielsweise eine hohe Umgebungstemperatur T_{U} größere Kälteverluste während des Betriebs der Kälteanlage 1 bedingt und ein möglichst energieoptimierter Betrieb bei höheren Umgebungstemperaturen Tᵤ nach einer anderen vordefinierten Kenngröße verlangt als im Falle von niedrigeren Umgebungstemperaturen Tᵤ.

Die werkseitige Auslegung der vordefinierten Kenngröße K_{V} kann diesbezüglich daher nur einen Kompromiss darstellen.

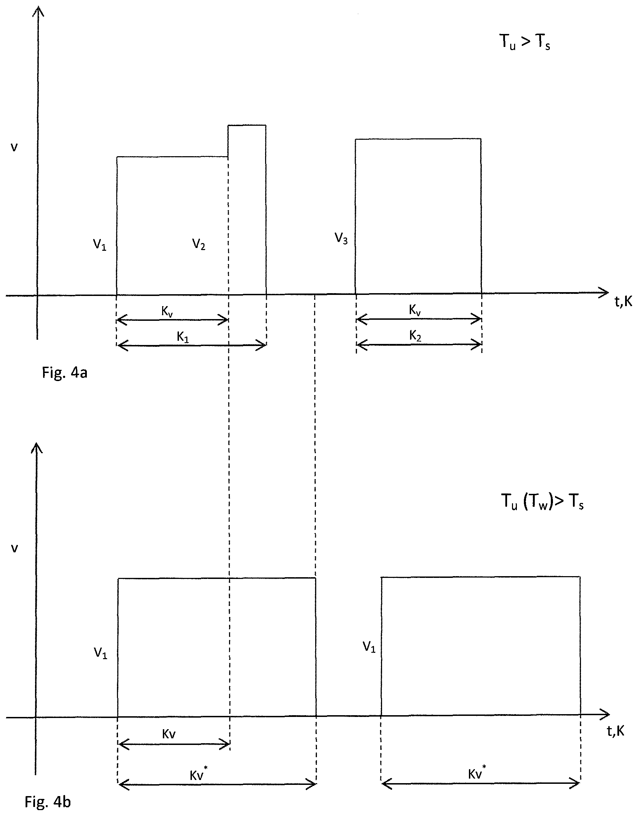

Figur 4a verdeutlicht den Einfluss der Einsatzbedingungen auf die Vorgabedrehzahlregelung im Stand der Technik. In dem dort dargestellten Ausführungsbeispiel liegt die tatsächliche Umgebungstemperatur T_{U} beim Betrieb des Kältemittelverdichters oberhalb des in den Standardbedingungen für die Auslegung der vordefinierte Dauer K_{V} des Kühlzyklus C_{K} berücksichtigten Umgebungstemperatur T_{U}.

Wie im ersten Kühlzyklus C_{K1} in Figur 4a dargestellt, übersteigt die tatsächliche Dauer K₁ des ersten Kühlzyklus C_{K1} die vordefinierte Dauer K_{V}, was nach Erreichen der vordefinierten Dauer Kᵥ eine Erhöhung Drehzahl auf eine erste erhöhte Drehzahl v₂ > Startdrehzahl v₁ bedingt. Der erhöhte Kältebedarf resultiert in diesem Fall jedoch nicht aus einem erhöhten Kältebedarf des Kühlvolumens 4, sondern aus den aufgrund der erhöhten Umgebungstemperatur T_{U} resultierenden höheren Kälteverlusten im Kältemittelsystem.

Der nachfolgende Kühlzyklus C_{K2} wird daraufhin mit einer weiteren erhöhten Drehzahl v₃ gestartet, wobei im vorliegenden Beispiel durch den Betrieb des Kältemittelverdichters 2 mit der weiteren erhöhten Drehzahl v₃ im nachfolgenden Kühlzyklus C_{K2} die tatsächliche Dauer K₂ des zweiten Kühlzyklus C_{K2} mit der vordefinierten Dauer K_{V} im Wesentlichen übereinstimmt und daher keine Änderung der Drehzahl v notwendig ist.

Über die Betriebsdauer der Kälteanlage 1 hinweg, muss der Kältemittelverdichter 1 daher aufgrund des Einflusses der Umgebungsbedingungen durchschnittlich mit einer höheren Drehzahl v betrieben werden, als eigentlich auf Basis eines möglichst energieoptimierten Betriebs vorgesehen ist bzw. zum Zeitpunkt der werkseitigen Programmierung der elektronischen Steuerung vorgesehen war.

Erfindungsgemäß wird daher eine weitere Temperatur T_{W} gemessen, die unabhängig von der Temperatur des Kühlvolumens 4 ist, und die vordefinierte Kenngröße K_{V}, also im vorliegenden Ausführungsbeispiel die vordefinierte Dauer K_{V} des Kühlzyklus C_{K} als Basis für die Vorgabedrehzahlregelung in Abhängigkeit der weiteren Temperatur T_{W} geändert wird. Über die weitere Temperatur T_{W} bzw. die Entwicklung der weiteren Temperatur T_{W} können in der elektronischen Steuereinrichtung 6 Rückschlüsse über die Einsatzbedingungen gezogen werden und so die vordefinierte Kenngröße K_{V} an die tatsächlich vorherrschenden Einsatzbedingungen, insbesondere die vorherrschende Umgebungstemperatur T_{U}, angepasst werden, wie in Fig. 4b ersichtlich ist. Grundsätzlich kann die weitere Temperatur T_{W} an jedem Punkt der Kälteanlage 1 - mit Ausnahme des Kühlvolumens 4 - oder sogar außerhalb der Kälteanlage 1 gemessen werden. Es hat sich jedoch als vorteilhaft herausgestellt, dass die weitere Temperatur T_{W} von der Temperaturmesseinrichtung 7 gemessen wird, welche, wie in den Ausführungsbeispielen in den Figuren 1 und 2 dargestellt, entweder Bestandteil der elektronischen Steuereinrichtung 6 des Kältemittelverdichters 2 ist oder am Gehäuse 8 des Kältemittelverdichters 2 angebracht ist. Da Kältemittelverdichter 2 und elektronische Steuereinrichtung 6 des Kältemittelverdichters 2 in der Regel als Baugruppe an die Hersteller von Kälteanlagen 1 geliefert werden, kann damit sichergestellt werden, dass die für die erfindungsgemäße Änderung der vordefinierten Kenngröße K_{V} notwendige weitere Temperatur T_{W} bereitgestellt wird.

Figur 4b veranschaulicht nun die Auswirkung der Änderung der vordefinierten Dauer K_{V}. Diese wird auf Basis der weiteren Temperatur T_{W} erfindungsgemäß in eine modifizierte vordefinierte Dauer K_{V}* modifiziert, die an die Stelle der in der elektronischen Steuereinrichtung 6 des Kältemittelverdichters 2 bei der Herstellung gespeicherten vordefinierten Dauer K_{V} tritt. Die Modifikation der vordefinierten Dauer K_{V} wird von der elektronischen Steuereinrichtung 6 vorgenommen, da die gemessene weitere Temperatur T_{W} eine erhöhte Umgebungstemperatur T_{U} indiziert.

Wie der Vergleich der Figuren 4a und 4b zeigt, ist die modifizierte vordefinierte Dauer K_{V}* länger als die vordefinierten Dauer K_{V}, sodass keine Erhöhung der Drehzahl v während der Kühlzyklen C_{K} nötig ist. Der Kältemittelverdichter 2 kann also relativ konstant mit der Startdrehzahl v₁ betrieben werden. Obwohl der Kältemittelverdichter 2 aufgrund der längeren modifizierten vordefinierten Dauer K_{V}* zwar länger angetrieben wird, ist der Energieverbrauch aufgrund der niedrigeren Drehzahl v geringer als in der Regelung gemäß Fig. 4a. Durch die erfindungsgemäße Änderung bzw. Modifizierung der vordefinierten Dauer K_{V} kann somit ein auf die Einsatzbedingungen der Kälteanlage 1 abgestimmter, möglichst energieoptimierter Betrieb ermöglicht werden. Analog zu der in Figur 3 beschriebenen Vorgabedrehzahlregelung, lassen sich alle dort beschriebenen Vorgänge natürlich auch mit der modifizierte vordefinierte Dauer K_{V}* anstatt der dort gezeigten, in der elektronischen Steuereinrichtung 6 bei der Herstellung gespeicherten, vordefinierten Dauer K_{V} ausführen, mit dem Ergebnis, dass eine Erhöhung der Drehzahl lediglich dann erfolgt, wenn auch diese modifizierte vordefinierte Dauer K_{V}* zu keinem Abschaltsignal durch den Thermostaten 3 führt.

Sollte die aufgrund der gemessenen weiteren Temperatur T_{W} bestimmte Umgebungstemperatur T_{U} weiter ansteigen, kann eine erneute Modifikation der modifizierten vordefinierten Dauer K_{V}*, etwa eine weitere Erhöhung der modifizierten Dauer K_{V}* des Kühlzyklus C_{K} notwendig sein. Wird jedoch Wert oder ein Temperaturverlauf der weiteren Temperatur T_{W} detektiert, der auf eine Senkung der Umgebungstemperatur T_{U} schließen lässt, kann die modifizierte vordefinierte Dauer K_{V}* des Kühlzyklus C_{K} gesenkt werden oder auf die vordefinierte Dauer K_{V} zurückgesetzt werden. Selbstverständlich ist es genauso denkbar, dass die modifizierte vordefinierte Dauer K_{V}* gegenüber den vordefinierte Dauer K_{V} verringert sein kann, wenn die Umgebungstemperatur T_{U} unterhalb des in den Standardbedingungen festgelegten Temperaturniveaus der Umgebungstemperatur T_{U} liegt.

### BEZUGSZEICHENLISTE

- 1: Kälteanlage
- 2: Kältemittelverdichter
- 3: Thermostat
- 4: Kühlvolumen
- 5: Kältemittelleitung
- 5a: Verdampfer
- 6: elektronische Steuereinrichtung des Kältemittelverdichters 2
- 7: Temperaturmesseinrichtung
- 8: Gehäuse des Kältemittelverdichters 2
- 8a: Gehäuseunterteil
- 8b: Gehäuseoberteil
- Kᵥ: vordefinierten Kenngröße
- K_{V}*: modifizierte vordefinierte Kenngröße
- Kₐ: aktuelle Kenngröße
- v: Drehzahl
- C_{R}: Ruhezyklus
- C_{K}: Kühlzyklus
- C: Betriebszyklus
- T_{w}: weitere Temperatur
- T_{U}: Umgebungstemperatur
- Tₛ: Standardtemperatur

## Patentansprüche

1. Verfahren zum Betrieb eines drehzahlvariablen Kältemittelverdichters (2) zur Kühlung eines Kühlvolumens (4) einer Kälteanlage (1), wobei diese zumindest einen Thermostat (3) zur direkten oder indirekten Überwachung eines Temperaturzustandes des Kühlvolumens (4) umfasst und wobei der Kältemittelverdichter (2) zyklisch betrieben wird und ein Kühlzyklus (C_{K}) des Kältemittelverdichters (2) beginnt, wenn der Kältemittelverdichter (2) durch ein vom Thermostat (3) ausgelöstes Schaltsignal in einen EIN-Zustand versetzt wird und der Kühlzyklus (C_{K}) endet, wenn der Kältemittelverdichter (2) durch ein vom Thermostat (3) ausgelöstes weiteres Schaltsignal in einen AUS-Zustand versetzt wird und das Drehzahlverhalten des Kältemittelverdichters (2) während eines Kühlzyklus (C_{K}) mittels einer in einer elektronischen Steuereinrichtung (6) des Kältemittelverdichters (2) gespeicherten Vorgabedrehzahlregelung auf Basis zumindest einer vordefinierten Kenngröße (Kᵥ) geregelt wird, indem die zumindest eine vordefinierte Kenngröße (Kᵥ) hinsichtlich Über- und/oder Unterschreitung durch eine aktuelle Kenngröße (Kₐ) eines aktuellen Kühlzyklus (C_{Ka}) überwacht wird,
**dadurch gekennzeichnet, dass**
eine von der Temperatur des Kühlvolumens (4) unabhängige, weitere Temperatur (T_{w}) gemessen wird und die zumindest eine vordefinierte Kenngröße (Kᵥ) in Abhängigkeit der weiteren Temperatur (T_{w}) geändert wird.

2. Verfahren nach Anspruch 1, **dadurch gekennzeichnet, dass** es sich bei der zumindest einen vordefinierten Kenngröße (Kᵥ) um die Dauer eines Kühlzyklus (C_{K}) handelt.

3. Verfahren nach einem der Ansprüche 1 oder 2, **dadurch gekennzeichnet, dass** die weitere Temperatur (T_{w}) von einer Temperaturmesseinrichtung (7) gemessen wird und die Temperaturmesseinrichtung (7) Bestandteil der elektronischen Steuereinrichtung (6) des Kältemittelverdichters (2) ist.

4. Verfahren nach einem Ansprüche 1 oder 2, **dadurch gekennzeichnet, dass** die weitere Temperatur (T_{w}) von einer Temperaturmesseinrichtung (7) gemessen wird und die Temperaturmesseinrichtung (7) an einem Gehäuse (8) des Kältemittelverdichters (2) angebracht ist.

5. Elektronische Steuereinrichtung (6) zur Steuerung des zyklischen Betriebs eines drehzahlvariablen Kältemittelverdichters (2),
wobei die elektronische Steuereinrichtung (6) dazu eingerichtet ist,
- den Kältemittelverdichter (2) aufgrund eines von einem Thermostat (3) zur direkten oder indirekten Überwachung eines Temperaturzustandes eines Kühlvolumens (4) einer Kälteanlage (1) ausgelösten Schaltsignals einzuschalten um einen Kühlzyklus (Cₖ) zu beginnen und
- den Kältemittelverdichter (2) aufgrund eines von dem Thermostat (3) ausgelösten weiteren Schaltsignals wieder auszuschalten um den Kühlzyklus (Cₖ) zu beenden und
- das Drehzahlverhalten des Kältemittelverdichters (2) während eines Kühlzyklus (Cₖ) mittels einer in einer elektronischen Steuereinrichtung (6) des Kältemittelverdichters (2) gespeicherten Vorgabedrehzahlregelung auf Basis zumindest einer vordefinierten Kenngröße (Kᵥ) zu regeln und
- im Rahmen der Vorgabedrehzahlregelung die zumindest eine vordefinierte Kenngröße (Kᵥ) hinsichtlich Über- und/oder Unterschreitung durch eine aktuelle Kenngröße (Kₐ) eines aktuellen Kühlzyklus (Cₖₐ) zu überwachen,
**dadurch gekennzeichnet, dass**
die elektronische Steuereinrichtung (6) mit einer Temperaturmesseinrichtung (7) zur Messung einer von der Temperatur Kühlvolumens (4) unabhängigen, weiteren Temperatur (T_{w}) verbunden ist und dazu eingerichtet ist, die zumindest eine vordefinierte Kenngröße (Kᵥ) in Abhängigkeit der weiteren Temperatur (T_{w}) zu ändern.

6. Elektronische Steuereinrichtung (6) nach Anspruch 5, **dadurch gekennzeichnet, dass** es sich bei der zumindest einen vordefinierten Kenngröße (Kᵥ) um die Dauer eines Kühlzyklus (C_{K}) handelt.

7. Elektronische Steuereinrichtung (6) nach einem der Ansprüche 5 oder 6, **dadurch gekennzeichnet, dass** die Temperaturmesseinrichtung (7) Bestandteil der elektronischen Steuereinrichtung (6) des Kältemittelverdichters (2) ist.

8. Elektronische Steuereinrichtung (6) nach einem der Ansprüche 5 oder 6, **dadurch gekennzeichnet, dass** die Temperaturmesseinrichtung (7) an einem Gehäuse (8) des Kältemittelverdichters (2) angeordnet ist.

9. Baugruppe umfassend
- einen drehzahlvariablen Kältemittelverdichter (2) mit einer elektrischen Antriebseinheit und einer durch die elektrische Antriebseinheit antreibbaren Kolben-Zylinder-Einheit zur Verdichtung von Kältemittel;
- eine elektronische Steuereinrichtung (6) nach einem der Ansprüche 5 bis 8 zur Steuerung des zyklischen Betriebs des drehzahlvariablen Kältemittelverdichters (2) nach einem Verfahren gemäß einem der Ansprüche 1 bis 4.

## Claims

1. A method for operating a variable-speed refrigerant compressor (2) for cooling a cooling volume (4) of a refrigeration system (1), wherein the refrigeration system (1) comprises at least one thermostat (3) for directly or indirectly monitoring a temperature state of the cooling volume (4), and wherein the refrigerant compressor (2) is operated cyclically and a cooling cycle (C_{K}) of the refrigerant compressor (2) begins when the refrigerant compressor (2) is placed in an ON state by a switching signal triggered by the thermostat (3) and the cooling cycle (C_{K}) ends when the refrigerant compressor (2) is placed in an OFF state by an additional switching signal triggered by the thermostat (3), and the rotational speed behavior of the refrigerant compressor (2) during a cooling cycle (C_{K}) is controlled by means of a preset closed-loop rotational speed control saved in an electronic control device (6) of the refrigerant compressor (2), based on at least one predefined parameter (Kᵥ), in that the at least one predefined parameter (Kᵥ) is monitored with respect to an over- and/or undershooting by a current parameter (Kₐ) of a current cooling cycle (C_{Ka}),
**characterized in that**
an additional temperature (T_{w}) independent from the temperature of the cooling volume (4) is measured and the at least one predefined parameter (Kᵥ) is changed as a function of the additional temperature (T_{w}).

2. The method according to claim 1, **characterized in that** the at least one predefined parameter (Kᵥ) is the duration of a cooling cycle (C_{K}).

3. The method according to one of claims claim 1 or 2, **characterized in that** the additional temperature (T_{w}) is measured by a temperature measurement device (7) and the temperature measurement device (7) is a component of the electronic control device (6) of the refrigerant compressor (2).

4. The method according one of claims 1 or 2, **characterized in that** the additional temperature (T_{w}) is measured by a temperature measurement device (7) and the temperature measurement device (7) is attached to a housing (8) of the refrigerant compressor (2).

5. An electronic control device (6) for controlling the cyclical operation of a variable-speed refrigerant compressor (2),
wherein the electronic control device (6) is configured
- to switch on the refrigerant compressor (2) as the result of a switching signal triggered by a thermostat (3) for directly or indirectly monitoring a temperature state of a cooling volume (4) of a refrigeration system (1), in order to begin a cooling cycle (Cₖ); and
- to switch off the refrigerant compressor (2) again as the result of an additional switching signal triggered by the thermostat (3), in order to end the cooling cycle (Cₖ); and
- to control the rotational speed behavior of the refrigerant compressor (2) during a cooling cycle (Cₖ) by means of a preset closed-loop rotational speed control saved in an electronic control device (6) of the refrigerant compressor (2), based on at least one predefined parameter (Kᵥ); and
- to monitor the at least one predefined parameter (Kᵥ) with regard to an over- and/or undershooting by a current parameter (Kₐ) of a current cooling cycle (Cₖₐ) within the scope of the preset closed-loop rotational speed control;
**characterized in that**
the electronic control device (6) is connected to a temperature measurement device (7) for measuring an additional temperature (T_{w}) independent from the temperature of the cooling volume (4) and is configured to change the at least one predefined parameter (Kᵥ) as a function of the additional temperature (T_{w}).

6. The electronic control device (6) according to claim 5, **characterized in that** the at least one predefined parameter (Kᵥ) is the duration of a cooling cycle (C_{K}).

7. The electronic control device (6) according to one of claims 5 or 6, **characterized in that** the temperature measurement device (7) is a component of the electronic control device (6) of the refrigerant compressor (2).

8. The electronic control device (6) according to one of claims 5 or 6, **characterized in that** the temperature measurement device (7) is arranged on a housing (8) of the refrigerant compressor (2).

9. An assembly comprising
- a variable-speed refrigerant compressor (2) with an electric drive unit and a cylinder/piston unit that can be driven by the electric drive unit for the compression of refrigerant;
- an electronic control device (6) according to one of claims 5 through 8 for controlling the cyclical operation of the variable-speed refrigerant compressor (2) based on a method according to one of claims 1 through 4.

## Revendications

1. Procédé de fonctionnement d'un compresseur de réfrigérant (2) à vitesse de rotation variable destiné à refroidir un volume de refroidissement (4) d'un système frigorifique (1) qui comprend au moins un thermostat (3) pour la surveillance directe ou indirecte d'un état de température du volume de refroidissement (4), le compresseur de réfrigérant (2) fonctionnant de manière cyclique et un cycle de refroidissement (C_{K}) du compresseur de réfrigérant (2) commençant lorsque le compresseur de réfrigérant (2) est mis dans un état de marche par un signal de commutation déclenché par le thermostat (3) et le cycle de refroidissement (C_{K}) se terminant lorsque le compresseur de réfrigérant (2) est mis dans un état d'arrêt par un autre signal de commutation déclenché par le thermostat (3), et le comportement de vitesse de rotation du compresseur de réfrigérant (2) pendant un cycle de refroidissement (C_{K}) étant régulé au moyen d'une régulation de vitesse de rotation de consigne enregistrée dans un dispositif de commande électronique (6) du compresseur de réfrigérant (2) sur la base d'au moins une grandeur caractéristique prédéfinie (Kᵥ), ladite au moins une grandeur caractéristique prédéfinie (Kᵥ) étant surveillée en ce qui concerne le dépassement vers le haut et/ou le bas par une grandeur caractéristique actuelle (Kₐ) d'un cycle de refroidissement actuel (C_{Ka}),
**caractérisé en ce**
**qu'**une autre température (T_{w}) indépendante de la température du volume de refroidissement (4) est mesurée et ladite au moins une grandeur caractéristique prédéfinie (Kᵥ) est modifiée en fonction de l'autre température (T_{w}).

2. Procédé selon la revendication 1, **caractérisé en ce que** ladite au moins une grandeur caractéristique prédéfinie (Kᵥ) est la durée d'un cycle de refroidissement (C_{K}).

3. Procédé selon l'une des revendications 1 ou 2, **caractérisé en ce que** l'autre température (T_{w}) est mesurée par un dispositif de mesure de température (7) et le dispositif de mesure de température (7) est un composant du dispositif de commande électronique (6) du compresseur de réfrigérant (2).

4. Procédé selon l'une des revendications 1 ou 2, **caractérisé en ce que** l'autre température (T_{w}) est mesurée par un dispositif de mesure de température (7) et le dispositif de mesure de température (7) est monté sur un boîtier (8) du compresseur de réfrigérant (2).

5. Dispositif de commande électronique (6) pour commander le fonctionnement cyclique d'un compresseur de réfrigérant à vitesse de rotation variable (2), le dispositif de commande électronique (6) étant conçu à cet effet
- pour mettre en marche le compresseur de réfrigérant (2) sur la base d'un signal de commutation déclenché par un thermostat (3) pour la surveillance directe ou indirecte d'un état de température d'un volume de refroidissement (4) d'un système frigorifique (1) afin de commencer un cycle de refroidissement (Cₖ) et
- pour arrêter à nouveau le compresseur de réfrigérant (2) sur la base d'un autre signal de commutation déclenché par le thermostat (3) afin de terminer le cycle de refroidissement (Cₖ) et
- pour réguler le comportement de vitesse de rotation du compresseur de réfrigérant (2) pendant un cycle de refroidissement (Cₖ) au moyen d'une régulation de vitesse de rotation de consigne enregistrée dans un dispositif de commande électronique (6) du compresseur de réfrigérant (2) sur la base d'au moins une grandeur caractéristique prédéfinie (Kᵥ) et
- pour surveiller, dans le cadre de la régulation de vitesse de rotation de consigne, ladite au moins une grandeur caractéristique prédéfinie (Kᵥ) en ce qui concerne le dépassement vers le haut et/ou le bas par une grandeur caractéristique actuelle (Kₐ) d'un cycle de refroidissement actuel (Cₖₐ),
**caractérisé en ce que**
le dispositif de commande électronique (6) est relié à un dispositif de mesure de température (7) destiné à mesurer une autre température (T_{w}) indépendante de la température du volume de refroidissement (4) et conçu pour modifier ladite au moins une grandeur caractéristique prédéfinie (Kᵥ) en fonction de l'autre température (T_{w}).

6. Dispositif de commande électronique (6) selon la revendication 5, **caractérisé en ce que** ladite au moins une grandeur caractéristique prédéfinie (Kᵥ) est la durée d'un cycle de refroidissement (C_{K}).

7. Dispositif de commande électronique (6) selon l'une des revendications 5 ou 6, **caractérisé en ce que** le dispositif de mesure de température (7) est un composant du dispositif de commande électronique (6) du compresseur de réfrigérant (2).

8. Dispositif de commande électronique (6) selon l'une des revendications 5 ou 6, **caractérisé en ce que** le dispositif de mesure de température (7) est disposé sur un boîtier (8) du compresseur de réfrigérant (2).

9. Ensemble comprenant
- un compresseur de réfrigérant à vitesse de rotation variable (2) comprenant une unité d'entraînement électrique et une unité piston-cylindre pouvant être entraînée par l'unité d'entraînement électrique pour comprimer un réfrigérant ;
- un dispositif de commande électronique (6) selon l'une des revendications 5 à 8 pour commander le fonctionnement cyclique du compresseur de réfrigérant à vitesse de rotation variable (2) d'après un procédé selon l'une des revendications 1 à 4.
